# EUROPEAN PATENT SPECIFICATION

(11) **EP 3 162 138 B1**
(45) Date of publication and mention of the grant of the patent: **13.02.2019**
(21) Application number: 14741401.5
(22) Date of filing: 26.06.2014
(51) Int. Cl.: H04L 12/841, H04W 72/12

(54) **GUARANTEED DOWNLOAD TIME**
GARANTIERTE DOWNLOAD-ZEIT
TEMPS DE TÉLÉCHARGEMENT GARANTI

(43) Date of publication of application: 03.05.2017
(73) Proprietor: Telefonaktiebolaget LM Ericsson (publ), 164 83 Stockholm (SE)
(72) Inventor: HURD, Magnus, S-118 67 Stockholm (SE); BLOMBERG, Petter, S-172 62 Sundbyberg (SE); SKÄRBY, Christian, S-112 64 Stockholm (SE); WILLARS, Per, S-185 94 Vaxholm (SE)
(74) Representative: Zacco Sweden AB
(86) International application number: PCT/IB2014/062638
(87) International publication number: WO 2015/198099

(56) References cited:
- WO-A2-2007/087057
- US-A1- 2012 100 879

## Description

### Field of the Disclosure

The present disclosure relates to resource scheduling for a wireless communications network. Specifically, the present disclosure relates to resource scheduling for a wireless communications network in order to ensure one or more transfers of data content are completed before a specified transfer deadline.

### Background

Wireless communications networks continue to provide access to an increasing number of resources and services. In many cases, a resource or service may demand a minimum quality of service (QoS) in order to deliver a desirable user experience. For example, real-time multimedia applications such as audio streaming, video streaming, and voice over internet protocol (VoIP) communications may demand a relatively high QoS in order to avoid delays in the delivery of content, which may be highly disruptive to an end user. Generally, radio resources in a wireless communications network are allocated via the establishment of one or more radio access bearers (RABs) between a radio access node and a wireless communications device. Each RAB is assigned certain QoS parameters, which are used by a scheduler in the radio access node to ensure that a minimum QoS is delivered for traffic over the RAB.

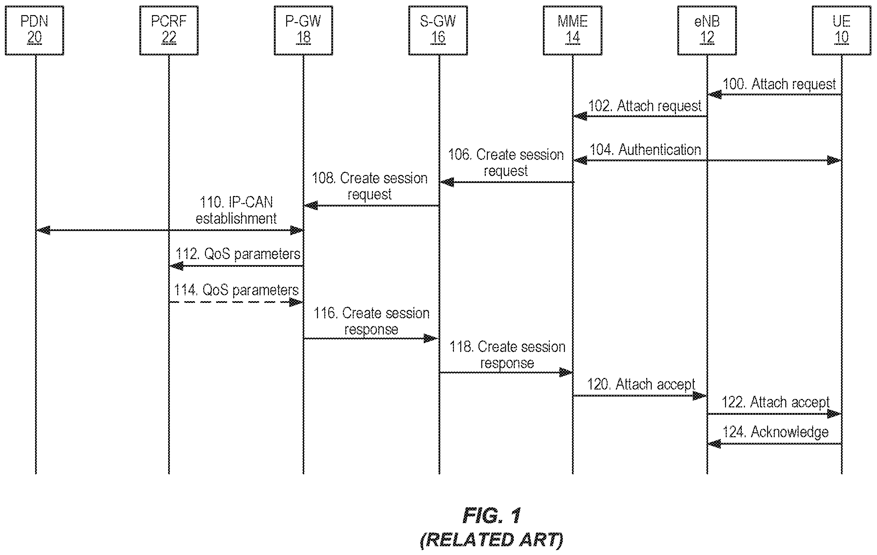

In an LTE network, one or more evolved RABs (E-RABs) may be established in what is known as an attach procedure, as illustrated in the call flow diagram shown in Figure 1. First, an attach request is sent from user equipment (UE) 10 to an evolved node B (eNB) 12 (step 100). The attach request is forwarded from the eNB 12 to a mobility management entity (MME) 14 (step 102). The UE 10 is then authenticated by the MME 14 (step 104), which may involve one or more external nodes such as a home subscriber server (not shown). Next, a create session request is sent from the MME 14 to a selected serving gateway (S-GW) 16, indicating the address of a packet data network (PDN) gateway (P-GW) 18 with which a connection is desired and one or more desired QoS parameters for the E-RAB that will serve the connection (step 106). The S-GW 16 then forwards the create session request to the indicated P-GW 18 (step 108). In response to the create session request, the P-GW 18 performs an IP connectivity access network (IP-CAN) establishment procedure with a packet data network (PDN) 20 (step 110). As part of the IP-CAN establishment procedure, the requested QoS parameters are provided from the P-GW 18 to a policy charging and rules function (PCRF) 22 (step 112). The PCRF 22 may then optionally modify the QoS parameters as indicated by one or more preconfigured settings based on the requested resource and/or service, and send back one or more updated QoS parameters to the P-GW 18 (step 114).

A create session response is then sent from the P-GW 18 to the S-GW 16, which contains the QoS information for the requested resource or service and an IP address for the UE 10 (step 116). The create session response is forwarded from the S-GW 16 to the MME 14 (step 118). If the QoS parameters for the create session response indicate that a guaranteed bitrate (GBR) E-RAB is to be established, the MME 14 together with the eNB 12 may then perform admission control to determine if the necessary resources are present to establish a bearer with the required QoS. If the necessary resources are available, and/or if the QoS parameters for the bearer indicate that a non-GBR bearer is to be established, an attach accept message is sent from the MME 14 to the eNB 12 and the S-GW 16 (step 120). The attach message is forwarded from the eNB 12 to the UE 10 (step 122). In response to the attach message, the UE 10 sends and acknowledgement message (step 124), at which point in time an E-RAB is established between the UE 10 and the P-GW 18. Additional messages may then be exchanged between one or more network nodes in the LTE network order to complete the attach process.

The QoS parameters for the E-RAB are generally indicated by a QoS class identifier (QCI), which may define a resource type (GBR or non-GBR), a priority, a packet delay budget (PDB), a packet error loss rate (PELR), a guaranteed uplink/downlink bitrate, and a maximum uplink/downlink bitrate for the E-RAB. Generally, a QCI represents a preconfigured QoS for a wide range of resources and/or services that may be accessed via a particular E-RAB. Based on one or more of the QoS parameters in a QCI for a particular E-RAB, radio resources in a wireless communications network are scheduled. One common scheduling strategy known as delay-based scheduling involves increasing the priority of a packet as the time the packet has spent in a scheduling queue starts to approach the specified PDB for traffic on the E-RAB. While effective in some applications, a delay-based scheduling strategy based on the QoS parameters discussed above is not well suited to transfers of data content that must be finished before a certain transfer deadline. Further, such a delay-based scheduling strategy is generally over-aggressive, often scheduling radio resources unnecessarily and therefore overburdening a wireless communications network.

Accordingly, there is a present need for a scheduling strategy capable of ensuring that one or more transfers of data content can complete before a transfer deadline, while simultaneously increasing the efficiency of radio resource allocation in a wireless communications network.

The document WO2007/087057 discloses determining, communicating and/or using delay information corresponding to queued information intended to be transmitted by a wireless terminal. The document US2012/100879, discloses a method for multi-bearer rate control for transporting user plane data from an application function associated with a sourcing device to an application function associated with a receiving device.

### Summary

The invention is defined by the independent claims. The dependent claims define advantageous embodiments.

Systems and methods related to resource scheduling for a wireless communications network in order to ensure one or more transfers of data content are completed before a specified transfer deadline are disclosed. In one embodiment, a method of operating a radio access node for a wireless communications network includes the steps of obtaining a minimum transfer bitrate for a transfer of data content between the radio access node and a wireless communications device, and scheduling one or more radio resources for the transfer of the data content based on the minimum transfer bitrate. The minimum transfer bitrate is calculated based on a total volume of the data content and a transfer deadline for the transfer of the data content. By using the minimum transfer bitrate to schedule one or more radio resources for the transfer of the data content, the transfer of the data content can be completed before the transfer deadline. Further, by calculating the minimum transfer bitrate based on the data volume and the transfer deadline, the efficiency of radio resource allocation for the transfer of the data content can be increased.

In one embodiment, an updated minimum transfer bitrate is obtained, and one or more radio resources for the transfer of the data content are scheduled based on the updated minimum transfer bitrate. The updated minimum transfer bitrate is calculated based on an estimate of the remaining portion of the total volume of the data content to be transferred and the transfer deadline for the transfer of the data content. By scheduling one or more radio resources for the transfer of the data content based on the updated minimum transfer bitrate, the efficiency of radio resource allocation for the transfer of the data content can be increased, while simultaneously ensuring that the transfer of the data content is completed before the transfer deadline.

In one embodiment, obtaining the minimum transfer bitrate includes receiving the minimum transfer bitrate from a network node in a core network associated with the radio access node.

In one embodiment, obtaining the minimum transfer bitrate includes receiving the total volume of the data content and the transfer deadline from a network node in a core network associated with the radio access node, and calculating the minimum transfer bitrate based on the total volume of the data content and the transfer deadline.

In one embodiment, the radio access node is an evolved node B (eNB), and the associated core network is an evolved packet core (EPC) network.

In one embodiment, a method of operating a core network associated with a wireless communications network includes the steps of obtaining a total volume of data content for a transfer of the data between a radio access node and a wireless communications device in the wireless communications network, obtaining a transfer deadline for the transfer of the data content, calculating a minimum transfer bitrate for the transfer of the data content based on the total volume of the data content and the transfer deadline, and communicating the minimum transfer bitrate to the radio access node in the wireless communications network.

In one embodiment, a method of operating a core network associated with a wireless communications network includes the steps of obtaining a total volume of data content for a transfer of the data content between a radio access node and a wireless communications device in the wireless communications network, obtaining a transfer deadline for the transfer of the data content, and communicating the total volume of the data content and the transfer deadline to the radio access node.

Those skilled in the art will appreciate the scope of the present disclosure and realize additional aspects thereof after reading the following detailed description of the embodiments in association with the accompanying drawing figures.

### Brief Description of the Drawing Figures

The accompanying drawing figures incorporated in and forming a part of this specification illustrate several aspects of the disclosure, and together with the description serve to explain the principles of the disclosure.
Figure 1 is a call flow diagram illustrating a conventional LTE attach procedure;
Figure 2A is a block diagram illustrating a long term evolution (LTE) communications network, which may be used according to the principles described in the present disclosure to ensure that a transfer of data content is completed before a transfer deadline while efficiently allocating radio resources for the transfer of the data content;
Figure 2B is a block diagram illustrating an alternative configuration of the LTE communications network shown in Figure 2A, which may be used according to the principles described in the present disclosure to ensure that a transfer of data content is completed before a transfer deadline while efficiently allocating radio resources for the transfer of the data content;
Figure 3 is a flow chart illustrating a method of operating a core network according to one embodiment of the present disclosure;
Figure 4 is a flow chart illustrating a method of operating a radio access node for a wireless communications network according to one embodiment of the present disclosure;
Figure 5 is a flow chart illustrating a method of operating a radio access node for a wireless communications network according to an additional embodiment of the present disclosure;
Figure 6 is a flow chart illustrating a method of operating a radio access node for a wireless communications network according to an additional embodiment of the present disclosure;
Figure 7 is a call flow diagram illustrating a method of operating a communications network according to one embodiment of the present disclosure;
Figure 8 is a call flow diagram illustrating a method of operating communications network according to one embodiment of the present disclosure;
Figure 9 is a call flow diagram illustrating a method of operating a communications network according to an additional embodiment of the present disclosure;
Figure 10 is a flow chart illustrating a method of operating a core network node according to an additional embodiment of the present disclosure;
Figure 11 is a flow chart illustrating a method of operating a radio access node for a wireless communications network according to an additional embodiment of the present disclosure;
Figure 12 is a flow chart illustrating a method of operating a radio access node for a wireless communications network according to an additional embodiment of the present disclosure;
Figure 13 is a call flow diagram illustrating a method of operating a communications network according to an additional embodiment of the present disclosure;
Figure 14 is a call flow diagram illustrating a method of operating a communications network according to an additional embodiment of the present disclosure;
Figure 15 is a call flow diagram illustrating a method of operating a content distribution network (CDN) according to one embodiment of the present disclosure.
Figure 16 is a call flow diagram illustrating a method of operating a communications network including a CDN caching node according to one embodiment of the present disclosure;
Figure 17 is a block diagram illustrating a radio access node according to one embodiment of the present disclosure;
Figure 18 is a block diagram illustrating a radio access node according to an additional embodiment of the present disclosure;
Figure 19 is a block diagram illustrating a core network node according to one embodiment of the present disclosure;
Figure 20 is a block diagram illustrating a core network node according to an additional embodiment of the present disclosure.

### Detailed Description

The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein.

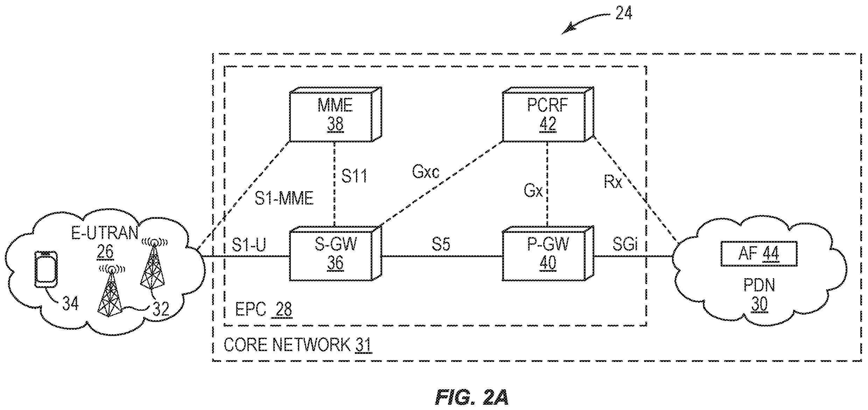

Figure 2A shows a long term evolution (LTE) communications network 24 according to one embodiment of the present disclosure. The LTE communications network 24 includes an evolved universal terrestrial radio access network (E-UTRAN) 26, an evolved packet core (EPC) network 28, and a packet data network (PDN) 30. Together, the EPC network 28 and the PDN 30 may be referred to generally as a core network 31. The E-UTRAN 26 includes one or more evolved node Bs (eNBs) 32, which may facilitate a connection from user equipment (UE) 34 located in the E-UTRAN 26 to one or more resources or services offered by the EPC network 28. The EPC network 28 includes a serving gateway (S-GW) 36, a mobility management entity (MME) 38, a packet data network (PDN) gateway (P-GW) 40, and a policy charging and rules function (PCRF) 42. The PDN 30 includes an application function (AF) 44.

The S-GW 36 is connected to the E-UTRAN 26 via an S1-U data connection. The MME 38 is connected to the E-UTRAN 26 via an S1-MME control connection. The S-GW 36 and the MME 38 are connected to one another via an S11 control connection. The S-GW 36 and the P-GW 40 are connected to one another via an S5 data connection. The P-GW 40 and the PCRF 42 are connected to one another via a Gx control connection. The P-GW 40 is connected to the PDN 30, and thus the AF 44, via an SGi data connection. Finally, the PCRF 42 is connected to the PDN 30, and thus the AF 44, via an Rx control connection, and is connected to the S-GW 36 via a Gxc control connection. Notably, the Rx control connection may be between the AF 44 and the PCRF 42, e.g., via the PDN 30.

The S-GW 36 serves as the main node responsible for connecting the E-UTRAN 26 to the EPC network 28 and acts as a mobility anchor for the UE 34 as the UE 34 moves between eNBs 32 in the E-UTRAN 26. The MME 38 is responsible for managing bearers, handling UE 34 transitions, and performing authentication of the UE 34. The P-GW 40 connects the EPC network 28 to the PDN 30 and performs such functions as allocating IP addresses and enforcing QoS rules provided by the PCRF 42. The PCRF 42 is generally responsible for QoS handling and charging.

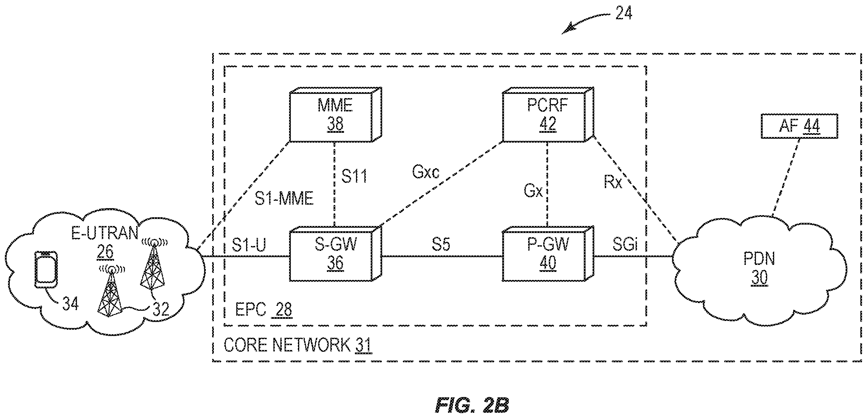

Figure 2B shows the LTE communications network 24 according to an additional embodiment of the present disclosure. As shown in Figure 2B, the AF 44 is located outside of the PDN 30, such that the AF 44 connects to the EPC network 28 via the PDN 30. In other embodiments, the AF 44 may directly connect to the PCRF 42 from outside of the PDN 30. Although the principles of the present disclosure are discussed with respect to the LTE communications network 24 shown in Figures 2A and 2B, the disclosure is not so limited. That is, the principles of the present disclosure may be applied to any suitable type of cellular communications network or to any suitable type of wireless communication system in general.

As discussed above, a particular resource or service may demand a minimum quality of service (QoS) in order to deliver a desirable user experience in the LTE communications network 24. In particular, it may be desirable for a transfer of data content associated with a resource or service to complete before a specified transfer deadline. Conventional delay-based scheduling strategies rely on one or more QoS parameters in a QoS class identifier (QCI), which are not individually tailored to a particular transfer of data content. Such a generalization of QoS parameters is unsuited to ensuring that one or more transfers of data content are completed before a transfer deadline, and further may result in the inefficient allocation of radio resources in a wireless communications network due to the unnecessary scheduling and/or prioritization of radio resources for a requested resource and/or service. Specifically, a delay-based scheduling strategy generally only looks at each packet of a larger set of data content to determine if the QoS parameters have been met, and is incapable of viewing the overall context of the transfer of the data content. Further, delay-based scheduling is based on the generalized QoS parameters discussed above, and is thus not tailored to any specific transfer of data content. Accordingly, a delay-based scheduling strategy may fail to ensure that a transfer of data content is completed before a transfer deadline, and further result in sub-optimal use of radio resources. Additionally, current E-RAB setup procedures establish a single QoS, which is used for the life of the E-RAB. As a result, different transfers of data content using the same E-RAB must use the same QoS parameters, which once again may result in sub-optimal use of radio resources for the same reasons discussed above.

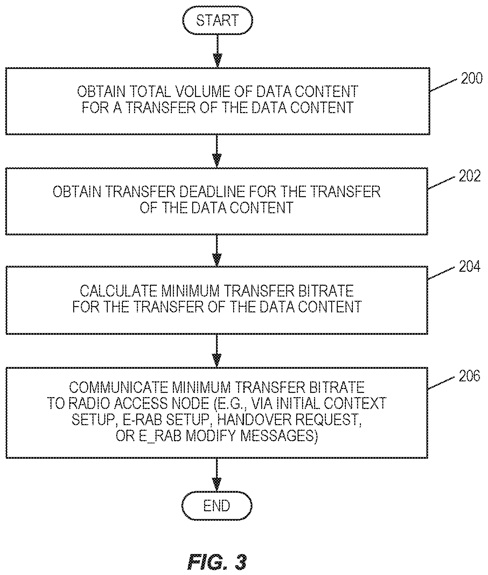

Figure 3 is a flow chart illustrating a method of operating a core network associated with a wireless communications network according to one embodiment of the present disclosure. First, a total volume of data content for a transfer of the data content between a radio access node and a wireless communications device in the wireless communications network is obtained by a core network node in the core network (step 200). As referred to herein, the total volume of the data content is the total size (e.g., in kilobytes (kB), megabytes (MB), gigabytes (GB), etc.) of the data associated with the transfer of the data content. For example, the data content may be a webpage, a purchased application, or a multimedia file, in which case the total volume of the data content would be the total size of the webpage including all of the resources associated therewith, the total size of the purchased application, or the total size of the multimedia file, respectively. In one embodiment, the radio access node is one of the eNBs 32 in the E-UTRAN 26, the wireless communications device is the UE 34, the core network is the EPC network 28, and the core network node is the AF 44. Obtaining the total volume of the data content may include receiving the total volume of the data content directly or indirectly from an additional network node and/or estimating the total volume of the data content. A transfer deadline for the transfer of the data content is then obtained by the core network node (step 202). Obtaining the transfer deadline for the transfer of the data content may include receiving the transfer deadline from an additional network node and/or looking up a transfer deadline for the transfer of the data content based on, e.g., one or more predetermined parameters, which may be provided by a content and/or service provider. The transfer deadline may be expressed as an absolute time, a relative time (e.g., relative to the start of the transfer), or the like.

Next, a minimum transfer bitrate for the transfer of the data is calculated (step 204). Notably, the minimum transfer bitrate is calculated based on the total volume of the data content and the transfer deadline. In one embodiment, the minimum transfer bitrate is calculated by dividing the total volume of the data content by the amount of time until the transfer deadline occurs. Calculating the minimum transfer bitrate based on the total volume of the data content and the transfer deadline results in an accurate measurement of the radio resources that should be dedicated to the transfer of the data content in order to ensure that the transfer of the data content is completed before the transfer deadline, which may subsequently be used to efficiently allocate radio resources for the transfer of the data content. Finally, the minimum transfer bitrate is communicated to the radio access node (step 206).

Communicating the minimum transfer bitrate to the radio access node may occur in a variety of ways. In one embodiment, the minimum transfer bitrate is communicated to the radio access node via one or more in-band messages. As discussed herein, in-band messages refer to messages sent alongside data associated with requested resources and/or services. For example, in-band messages may refer to messages sent via the data connections S1-U, S5, and/or SGi, shown in Figures 2A and 2B. In another embodiment, the minimum transfer bitrate is communicated to the radio access node via one or more out-of-band control messages. As discussed herein, out-of-band control messages refer to messages sent via dedicated control paths, separate from the data associated with requested resources and/or services. For example, out-of-band control messages may refer to messages sent via the control connections S1-MME, S11, Gxc, Gx, Rx, shown in Figures 2A and 2B. In other embodiments, the minimum transfer bitrate is communicated to the radio access node via one or more proprietary messaging formats.

Communicating the minimum transfer bitrate to the radio access node via one or more out-of-band control messages may include sending the minimum transfer bitrate in an information element (IE) included in an INITIAL CONTEXT SETUP, an E-RAB SETUP, an E-RAB MODIFY, or a HANDOVER REQUEST message. While not essential, details of the INITIAL CONTEXT SETUP REQUEST, the E-RAB SETUP, the E-RAB MODIFY, and the HANDOVER REQUEST messages are discussed in 3GPP Technical Specification 36.413, version 12.1.0, sections 8.2-8.4, which are herein incorporated by reference in their entirety. Notably, an INITIAL CONTEXT SETUP REQUEST, an E-RAB SETUP, an E-RAB MODIFY, and a HANDOVER REQUEST message may include a guaranteed bitrate (GBR) quality of service (QoS) information IE, which can be used to communicate the minimum transfer bitrate. Accordingly, communicating the minimum transfer bitrate may include communicating the minimum transfer bitrate in a GBR QoS information IE included in one of an INITIAL CONTEXT SETUP, an E-RAB SETUP, an E-RAB MODIFY, or a HANDOVER REQUEST message.

While not essential, details of the GBR QoS Information IE are discussed in 3GPP Technical Specification 36.413, version 12.1.0, section 9.2.1.18, which is herein incorporated by reference in its entirety. Generally, a GBR QoS Information IE is used to communicate configuration parameters for the establishment of GBR E-RABs, which are subsequently used by an eNB in an admission control process to determine whether or not resources exist for the establishment of the particular E-RAB. In other words, messages relating to the establishment of non-GBR E-RABs generally do not include a GBR QoS Information IE. In some embodiments, the present disclosure proposes to use the GBR QoS Information IE to communicate the minimum transfer bitrate regardless of whether the particular E-RAB used for the transfer of the data content is a GBR E-RAB or a non-GBR E-RAB.

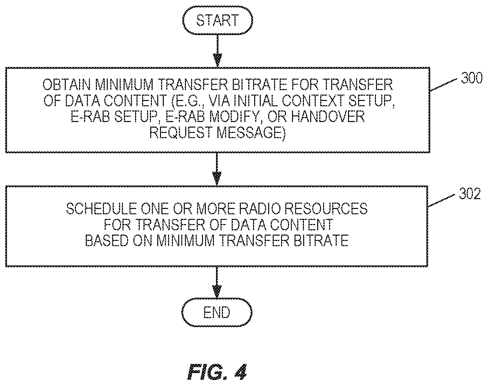

Figure 4 is a flow chart illustrating a method of operating a radio access node in a wireless communications network according to one embodiment of the present disclosure. To begin, the radio access node obtains a minimum transfer bitrate for the transfer of data content between the radio access node and a wireless communications device in the wireless communications network (step 300). The wireless communications network may be the E-UTRAN 26, the radio access node is one of the eNBs 32, and the wireless communications device is the UE 34. In one embodiment, the minimum transfer bitrate is obtained by extracting the minimum transfer bitrate from a GBR QoS Information IE within an INITIAL CONTEXT SETUP, an E-RAB SETUP, an E-RAB MODIFY or a HANDOVER REQUEST message received from an associated core network node, such as the core network node discussed with respect to Figure 3. However, the minimum transfer bitrate may be obtained by any suitable means, such as via in-band signaling or proprietary signaling, without departing from the principles of the present disclosure. As discussed above, the minimum transfer bitrate is calculated based on a total volume of the data content and a transfer deadline. Accordingly, an accurate measurement of the radio resources that must be dedicated to the transfer of the data content in order to ensure that the transfer of the data content is completed before the transfer deadline is obtained, which may subsequently be used to efficiently allocate radio resources for the transfer of the data content.

Next, one or more radio resources for the transfer of the data content are scheduled by the radio access node based on the minimum transfer bitrate (step 302). By using the minimum transfer bitrate to schedule one or more radio resources in the radio access node, the transfer of the data content may be completed before the transfer deadline, while improving the efficiency of radio resource usage in the radio access node.

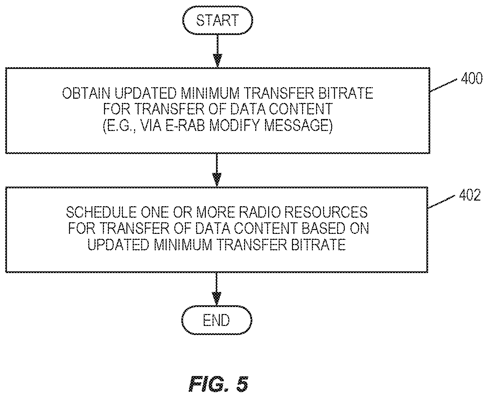

In order to ensure that the transfer of the data content is completed before the transfer deadline and that radio resources are efficiently allocated in the radio access node, it may be desirable to update the minimum transfer bitrate during the course of the transfer of the data content. This process may be used to update the minimum transfer rate obtained in the process of Figure 4. Accordingly, Figure 5 is a flow chart illustrating a method of operating the radio access node described in Figure 4 during an update of the minimum transfer bandwidth. First, an updated minimum transfer bitrate for the transfer of the data content is obtained (step 400). In some embodiments, the updated minimum transfer bitrate may be obtained by extracting the updated minimum transfer bitrate from a GBR QoS Information IE obtained from an associated core network node, such as the core network node discussed with respect to Figure 3. Since the E-RAB for the transfer of the data content is already established, the GBR QoS Information IE may be communicated in an E-RAB MODIFY message. The updated minimum transfer bitrate may be obtained by any suitable means, such as via in-band signaling or proprietary signaling, without departing from the principles of the present disclosure. In one embodiment, the updated minimum transfer bitrate is calculated based on a remaining portion of the total volume of the data content to be transferred and the transfer deadline. In an additional embodiment, the updated minimum transfer bitrate is calculated by dividing the remaining portion of the total volume of the data content to be transferred by the amount of time remaining until the transfer deadline.

Next, one or more radio resources for the transfer of the data content are scheduled by the radio access node based on the updated minimum transfer bitrate (step 402). By using the updated minimum transfer bitrate to schedule one or more radio resources in the radio access node, the transfer of data content may be completed before the transfer deadline, while improving the efficiency of radio resource usage in the radio access node by allowing the radio access node to allocate the resources not needed to fulfill the minimum transfer bitrate to other services.

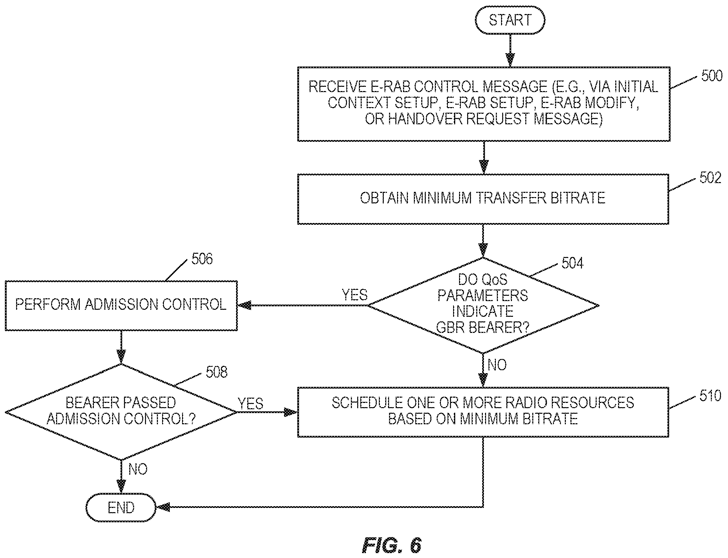

As discussed above, the parameters included in a GBR QoS Information IE are generally used to perform admission control for the establishment of GBR E-RABs; however, in some embodiments, the present disclosure proposes using the GBR QoS Information IE to communicate a minimum transfer bitrate for a transfer of data content regardless of whether the particular E-RAB used for the transfer of the data content is a GBR E-RAB or a non-GBR E-RAB. Accordingly, Figure 6 is a flow chart illustrating a method of operating the radio access node including an admission control procedure according to one embodiment of the present disclosure. First, an E-RAB control message is received by the radio access node (step 500). In one embodiment, the E-RAB control message is an INITIAL CONTEXT SETUP, an E-RAB SETUP, an E-RAB MODIFY, or a HANDOVER REQUEST message. In an additional embodiment, the E-RAB control message is received from the core network node in the associated core network.

A minimum transfer bitrate for a transfer of data content is then obtained by the radio access node (step 502). In one embodiment, the minimum transfer bitrate for the transfer of the data content is obtained by extracting the minimum transfer bitrate from a GBR QoS Information IE in the E-RAB control message, as discussed above. The radio access node then checks if the E-RAB control message indicates that a GBR E-RAB is to be established or modified for the transfer of the data content (step 504). If a GBR E-RAB is indicated, an admission control procedure is performed by the radio access node, in which the radio access node checks if it has the necessary radio resources to provide the desired QoS parameters for the E-RAB (step 506). If the admission control process indicates that the radio access node has the available resources for the E-RAB, one or more radio resources for the transfer of the data content are scheduled based on the minimum transfer bitrate (step 508). If the admission control process indicates that the radio access node does not have the available resources for the E-RAB, the E-RAB is either terminated or not modified, and the process ends. As discussed above, the present disclosure proposes using a GBR QoS Information IE to communicate the minimum transfer bitrate for the transfer of the data content regardless of whether the E-RAB for the transfer of the data content is a GBR E-RAB or a non-GBR E-RAB. Accordingly, even if the radio access node determines that the E-RAB to be established or modified for the transfer of the data content is indicated as a non-GBR E-RAB, the minimum transfer bitrate extracted from the GBR QoS Information IE is still used to schedule one or more radio resources for the transfer of the data content (step 510).

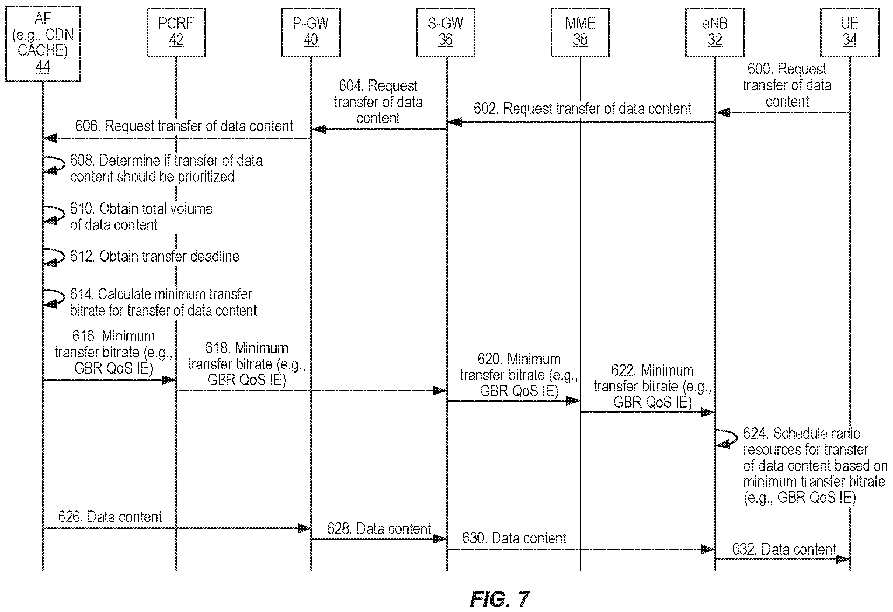

Figure 7 is a call flow diagram illustrating a method of operating the LTE communications network 24 according to one embodiment of the present disclosure. First, the UE 34 sends a request for a transfer of data content to the eNB 32 (step 600). In one embodiment, the request for the transfer of the data content is a request that should be completed before a transfer deadline due to one or more QoS parameters associated with a particular resource and/or service. For example, the request for the transfer of the data content could be a request to stream a multimedia file, a request to make an e-commerce purchase, or a request for location information such as a map of a particular area. As discussed above, failing to deliver data content in one or more of these examples in a timely fashion may be highly disruptive to an end user, and thus a transfer deadline may be imposed to ensure a desirable user experience.

The eNB 32 forwards the request for the transfer of the data content to the S-GW 36 (step 602), which in turn forwards the request to the P-GW 40 (step 604). The P-GW 40 then forwards the request for the transfer of the data content to the AF 44 (step 606). In one embodiment, the AF 44 is a caching node for a content delivery network (CDN). Accordingly, the AF 44 may include a cache of the requested data content (e.g., resulting from a pre-fetch procedure or a previous request for transfer of the data content). The AF 44 then determines if the transfer of the data content should be prioritized (step 608). In one embodiment, determining if the transfer of the data content should be prioritized includes checking one or more preconfigured QoS recommendations for the requested data content, and determining if the data content should be transferred before a transfer deadline in order to ensure a desirable user experience. If the transfer of the data content should not be prioritized, the LTE communications network 24 may proceed to operate normally.

If the transfer of the data content should be prioritized, a total volume of the data content is obtained by the AF 44 (step 610). Since the AF 44 may include a cache of the requested data content as discussed above, the AF 44 may already know the total volume of the data content based on the total size of the cache associated with the data content. In one embodiment, the total volume of the data content is obtained by accessing historical information regarding one or more previous transfers of the data content. However, any suitable technique may be used to obtain the total volume of the data content locally at the AF 44 or to obtain the total volume of the data content from, e.g., another network node. A transfer deadline for the transfer of the data content is also obtained by the AF 44 (step 612). The transfer deadline may be based on the particular data content requested by the UE 34, as different resources and/or services may require a different QoS in order to maintain a desirable user experience. In one embodiment, the transfer deadline is determined based upon one or more preconfigured QoS recommendations for a particular resource and/or service, which are stored by the AF 44.

A minimum transfer bitrate for the transfer of the data content is then calculated based on the total volume of the data content and the transfer deadline (step 614). In one embodiment, the minimum transfer bitrate for the transfer of the data content is calculated by dividing the total volume of the data content by the amount of time remaining until the transfer deadline. As discussed above, calculating the minimum transfer bitrate in this way results in an accurate measurement of the radio resources that should be dedicated to the transfer of the data content in order to ensure that the transfer of the data content is completed before the transfer deadline, which may subsequently be used to efficiently allocate radio resources for the transfer of the data content. The minimum transfer bitrate is then communicated from the AF 44 to the PCRF 42 (step 616). In one embodiment, the minimum transfer bitrate is communicated from the AF 44 to the PCRF 42 via a GBR QoS Information IE, such as in an INITIAL CONTEXT SETUP, an E-RAB SETUP, an E-RAB MODIFY, or a HANDOVER REQUEST message, as discussed in detail above. Since, the GBR QoS IE is already well defined for LTE communications networks, using the GBR QoS Information IE may provide a convenient way to communicate the minimum transfer bitrate between the various network nodes.

The PCRF 42 then forwards the minimum transfer bitrate to the S-GW 36 (step 618), which in turn forwards the minimum transfer bitrate to the MME 38 (step 620). The MME 38 forwards the minimum transfer bitrate to the eNB 32 (step 622). The eNB 32 then schedules one or more radio resources for the transfer of the data content based on the minimum transfer bitrate (step 624). As discussed above, using the minimum transfer bitrate to schedule one or more radio resources for the transfer of the data content allows for a more efficient allocation of radio resources when compared to conventional methods. The data content is then transferred from the AF 44 to the P-GW 40 (step 626), from the P-GW 40 to the S-GW 36 (step 628), from the S-GW 36 to the eNB 32 (step 630), and finally from the eNB 32 to the UE 34 (step 632).

Throughout the transfer of the data content, it may become apparent, for example, due to changes in network conditions, that the minimum transfer bitrate is either too slow or too fast. If the minimum transfer bitrate is too slow, the transfer of the data content will not finish before the transfer deadline, thereby degrading the quality of the user experience for the particular resource and/or service the data content is associated with. If the minimum transfer bitrate is too fast, the efficiency of radio resource allocation in the E-UTRAN 26 may suffer. Accordingly, it may be desirable to update the minimum transfer bitrate one or more times throughout the transfer of the data content.

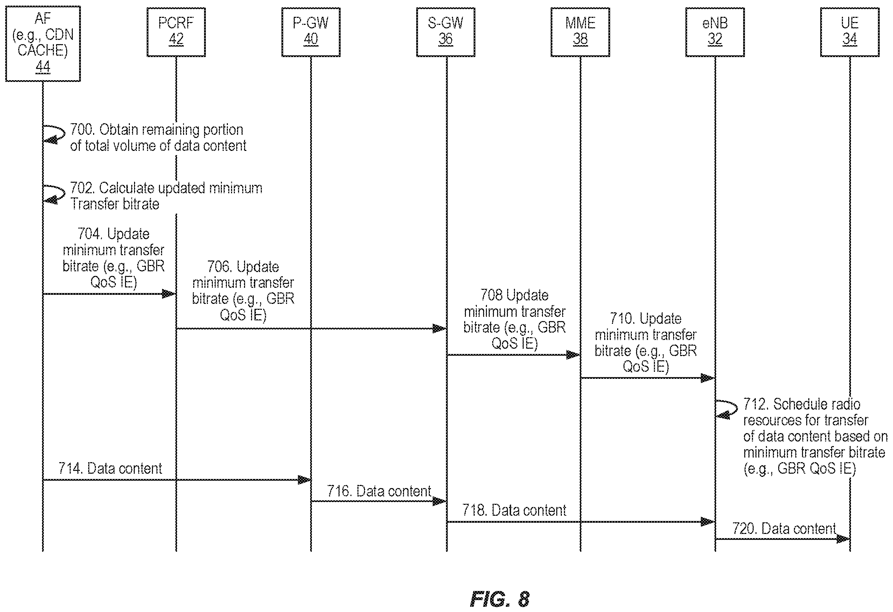

Figure 8 is a call flow diagram illustrating a method of operating the LTE communications network 24 to update the minimum transfer bitrate according to one embodiment of the present disclosure. This process may be used to update the minimum bitrate of, e.g., Figure 7. First, at some point during the transfer of the data content, the AF 44 obtains the remaining portion of the total volume of data content to be transferred (step 700). For example, if the total volume of the data content is 10 Megabytes (MB), then after some amount of time after the transfer has started, there may be 8 MB remaining for the transfer. In one embodiment, the remaining portion of the total volume of the data content may be obtained by subtracting the volume of the data content that has already been transferred from the AF 44 to the UE 34 from the total volume of the data content. The AF 44 then calculates an updated minimum transfer bitrate based on the remaining portion of the total volume of the data content to be transferred (step 702). In one embodiment, the updated minimum transfer bitrate may be calculated by dividing the remaining portion of the total volume of the data to be transferred by the time remaining until the transfer deadline.

The updated minimum transfer bitrate is then communicated from the AF 44 to the PCRF 42 (step 704), from the PCRF 42 to the S-GW 36 (step 706), from the S-GW 36 to the MME 38 (step 708), and from the MME 38 to the eNB 32 (step 710). As discussed above, the updated minimum transfer bitrate may also be communicated in a GBR QoS Information IE. Since the E-RAB for the transfer of the data content is already established at this point in time, the GBR QoS Information IE may be communicated in an E-RAB MODIFY message. The eNB 32 then schedules one or more radio resources for the transfer of the data content based on the updated minimum transfer bitrate (step 712). Finally, the data content is transferred from the AF 44 to the P-GW 40 (step 714), from the P-GW 40 to the S-GW 36 (step 716), from the S-GW 36 to the eNB 32 (step 718), and from the eNB 32 to the UE 34 (step 720).

Updating the minimum transfer bitrate throughout the transfer of the data content ensures that the data content will be transferred to the UE 34 before the transfer deadline. Further, updating the minimum transfer bitrate throughout the transfer of the data content results in the efficient allocation of radio resources in the E-UTRAN 26, because periodically updating the minimum transfer bitrate prevents overscheduling of radio resources for the transfer of the data content.

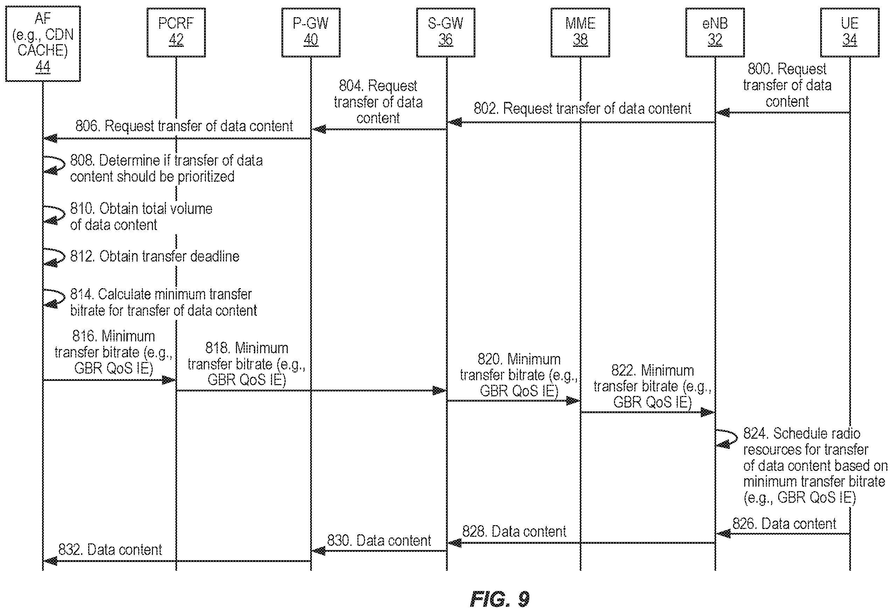

Figure 9 is a call flow diagram illustrating a method of operating the LTE communications network 24 according to an additional embodiment of the present disclosure. The call flow diagram shown in Figure 9 is substantially similar to that shown in Figure 7, except that while the call flow diagram in Figure 7 shows a download of data content from the AF 44 to the UE 34, the call flow diagram shown in Figure 9 shows an upload of data content from the UE 34 to the AF 44. That is, the transfer of the data content flows from the UE 34 to the eNB 32 (step 826), from the eNB 32 to the S-GW 36 (step 828), from the S-GW 36 to the P-GW 40 (step 830), and from the P-GW 40 to the AF 44 (step 832). The transfer of data content may be either a download of the data content or an upload of the data content in any of the embodiments described herein without departing from the principles of the present disclosure.

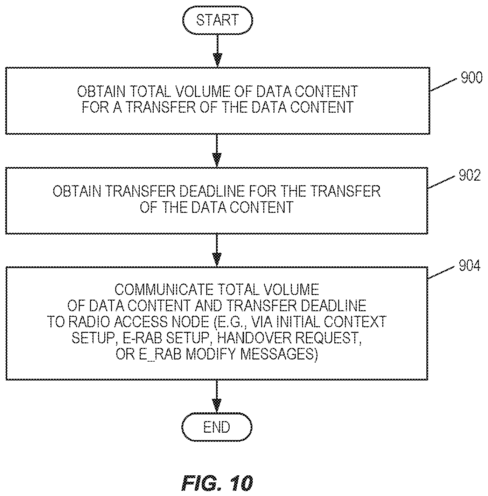

In the embodiments discussed above, a minimum transfer bitrate for a transfer of data content is calculated by a core network node in a core network associated with a wireless communications network, and communicated to a radio access node in the wireless communications network. In some embodiments, however, it may be desirable to calculate the minimum transfer bitrate at the radio access node itself. Accordingly, Figure 10 is a flow chart illustrating a method of operating a core network associated with a wireless communications network according to one embodiment of the present disclosure. First, a total volume of data content for a transfer of the data content between a radio access node and a wireless communications device in the wireless communications network is obtained by a core network node in the core network (step 900). In one embodiment, the radio access node is one of the eNBs 32 in the E-UTRAN 26, the wireless communications device is the UE 34, the core network is the EPC network 28, and the core network node is the AF 44. Obtaining the total volume of the data content may include receiving the total volume of the data content directly or indirectly from an additional network node and/or estimating the total volume of the data content. A transfer deadline for the transfer of the data content is then obtained by the core network node (step 902). Obtaining the transfer deadline for the transfer of the data content may include receiving the transfer deadline from an additional network node and/or looking up a transfer deadline for the transfer of the data content based on one or more predetermined QoS parameters. Finally, the total volume of the data content and the transfer deadline are communicated to the radio access node (step 904).

As discussed above, communicating the total volume of the data content and the transfer deadline to the radio access node may occur in a variety of ways. In one embodiment, the total volume of the data content and the transfer deadline are communicated to the radio access node via one or more in-band messages. In an additional embodiment, the total volume of the data content and the transfer deadline are communicated to the radio access node via one or more out-of-band control messages, for example, by a GBR QoS Information IE in an INITIAL CONTEXT SETUP, an E-RAB SETUP, an E-RAB MODIFY, or a HANDOVER REQUEST message. In other embodiments, the total volume of the data content and the transfer deadline are communicated to the radio access node via proprietary signaling.

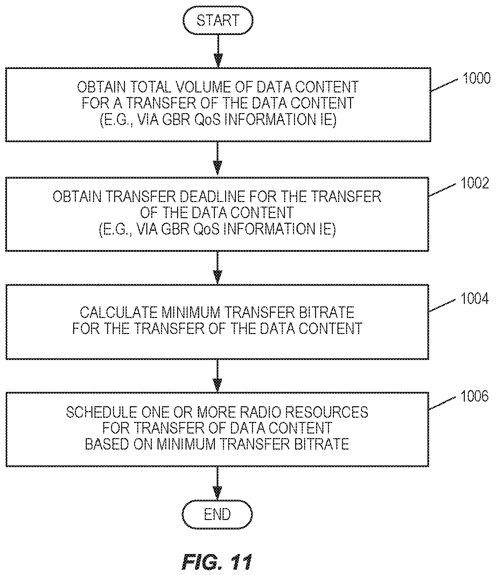

Figure 11 is a flow chart illustrating a method of operating a radio access node in a wireless communications network according to one embodiment of the present disclosure. To begin, the radio access node obtains a total volume of data content for a transfer of the data content between the radio access node and a wireless communications device in the wireless communications network (step 1000). The wireless communications network may be the E-UTRAN 26, the radio access node may be one of the eNBs 32, and the wireless communications device may be the UE 34. In one embodiment, the total volume of the data content is obtained by extracting the total volume of the data content from a GBR QoS Information IE within an INITIAL CONTEXT SETUP REQUEST, an E-RAB SETUP, an E-RAB MODIFY or a HANDOVER REQUEST message received from an associated core network node, such as the core network node discussed with respect to Figure 9. However, the minimum transfer bitrate may be obtained by any suitable means, such as via in-band signaling or proprietary signaling, without departing from the principles of the present disclosure.

Next, the radio access node obtains a transfer deadline for the transfer of the data content (step 1002). Once again, the transfer deadline may be obtained by extracting the transfer deadline from a GBR QoS Information IE within an INITIAL CONTEXT SETUP REQUEST, an E-RAB SETUP, an E-RAB MODIFY, or a HANDOVER REQUEST message received from an associated core network node, such as the core network node discussed with respect to Figure 9. The transfer deadline may be obtained by any suitable means without departing from the principles of the present disclosure.

The radio access node then calculates a minimum transfer bitrate for the transfer of the data content based on the total volume of the data content and the transfer deadline (step 1004). In one embodiment, the minimum transfer bitrate is calculated by dividing the total volume of the data content by the time remaining until the transfer deadline. Calculating the minimum transfer bitrate based on the total volume of the data content and the transfer deadline allows an accurate measurement of the radio resources that should be dedicated to the transfer of the data content in order to ensure that the transfer of the data content is completed before the transfer deadline to be obtained. Finally, the radio access node schedules one or more radio resources for the transfer of the data content based on the minimum transfer bitrate (step 1006). Using the minimum transfer bitrate to schedule one or more radio resources for the transfer of the data content results in efficient allocation of radio resources in the wireless communications network.

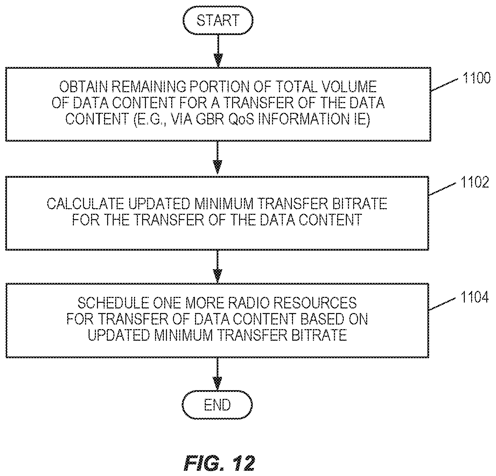

As discussed above, it may be desirable to update the minimum transfer bitrate during the course of the transfer of the data content. Accordingly, Figure 12 is a flow diagram illustrating a method of operating the radio access node described in Figure 11 during an update of the minimum transfer bandwidth. First, a remaining portion of the total volume of the data content to be transferred is obtained by the radio access node (step 1100). Obtaining the remaining portion of the total volume of the data content to be transferred may include extracting the remaining portion of the total volume of the data content to be transferred from a GBR QoS Information IE obtained from an associated core network node, such as the core network node discussed with respect to Figure 9. Since the E-RAB for the transfer of the data content is already established, the GBR QoS Information IE may be communicated in an E-RAB MODIFY message. The remaining portion of the total volume of the data content to be transferred may be obtained by any suitable means without departing from the principles of the present disclosure.

The radio access node then calculates an updated minimum transfer bitrate for the transfer of the data content based on the remaining portion of the total volume of the data content to be transferred and the transfer deadline (step 1102). In one embodiment, calculating the updated minimum transfer bitrate for the transfer of the data content includes dividing the remaining portion of the total volume of the data content to be transferred by the amount of time remaining until the transfer deadline. Finally, one or more radio resources for the transfer of the data content are scheduled by the radio access node based on the updated minimum transfer bitrate (step 1104). By using the updated minimum transfer bitrate to schedule one or more radio resources in the radio access node, the transfer of data content may be completed before the transfer deadline, while improving the efficiency of radio resource usage in the radio access node by allowing the radio access node to dynamically change the minimum transfer bitrate based on network conditions.

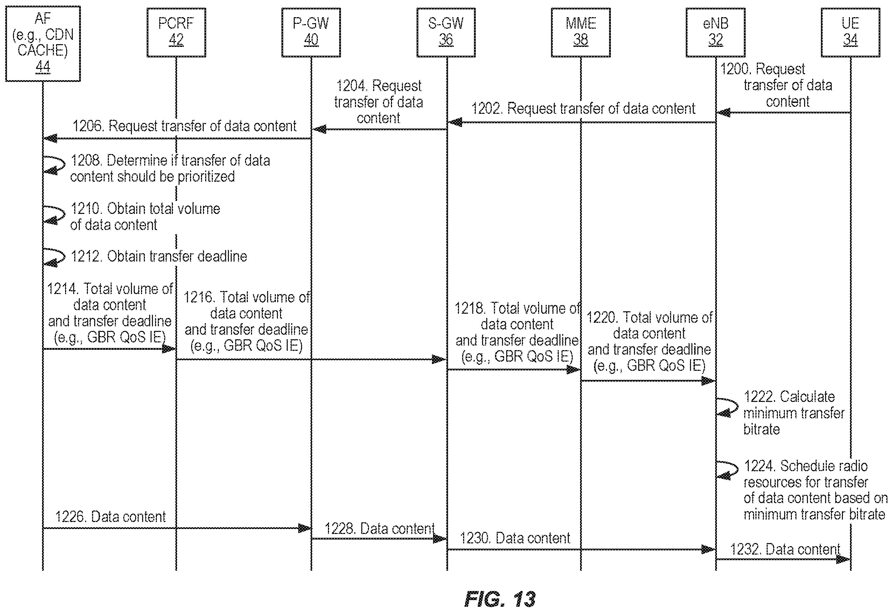

Figure 13 is a call flow diagram illustrating a method of operating the LTE communications network 24 according to one embodiment of the present disclosure. First, the UE 34 sends a request for a transfer of data content to the eNB 32 (step 1200). In one embodiment, the request for the transfer of the data content is a request that should be completed before a transfer deadline due to one or more QoS parameters associated with a particular resource and/or service. The eNB 32 forwards the request for the transfer of the data content to the S-GW 36 (step 1202), which in turn forwards the request to the P-GW 40 (step 1204). The P-GW 40 then forwards the request for the transfer of the data content to the AF 44 (step 1206). In one embodiment, the AF 44 is a caching node for a CDN. Accordingly, the AF 44 may include a cache of the requested data content. The AF 44 then determines if the transfer of the data content should be prioritized (step 1208). In one embodiment, determining if the transfer of the data content should be prioritized includes checking one or more preconfigured QoS recommendations for the requested data content, and determining if the data content should be transferred before a transfer deadline in order to ensure a desirable user experience. If the transfer of the data content should not be prioritized, the LTE communications network 24 may proceed to operate normally.

If the transfer of the data content should be prioritized, a total volume of the data content is obtained by the AF 44 (step 1210). Since the AF 44 may include a cache of the requested data content as discussed above, the AF 44 may already know the total volume of the data content based on the size of the cache associated with the data content. In one embodiment, the total volume of the data content is obtained by accessing historical information about one or more previous transfers of the data content. A transfer deadline for the transfer of the data content is then obtained by the AF 44 (step 1212). The transfer deadline may be based on the particular data content requested by the UE 34, as different resources and/or services may require different QoS in order to maintain a desirable user experience. The total volume of the data content and the transfer deadline are then communicated from the AF 44 to the PCRF 42 (step 1214). In one embodiment, the total volume of the data content and the transfer deadline are communicated from the AF 44 to the PCRF 42 via a GBR QoS Information IE, such as in an INITIAL CONTEXT SETUP, an E-RAB SETUP, an E-RAB MODIFY, or a HANDOVER REQUEST message, as discussed in detail above. The total volume of the data content and the transfer deadline are then forwarded form the PCRF 42 to the S-GW 36 (step 1216), from the S-GW 36 to the MME 38 (step 1218), and from the MME 38 to the eNB 32 (step 1220).

The eNB 32 then calculates a minimum transfer bitrate for the transfer of the data content based on the total volume of the data content and the transfer deadline (step 1222). Calculating the minimum transfer bitrate for the transfer of the data content may include dividing the total volume of the data content by the time remaining until the transfer deadline. Based on the minimum transfer bitrate, the eNB 32 schedules one or more radio resources for the transfer of the data content (step 1224). As discussed above, using the minimum transfer bitrate to schedule one or more radio resources for the transfer of the data content allows for a more efficient allocation of radio resources when compared to conventional methods. The data content is then transferred from the AF 44 to the P-GW 40 (step 1226), from the P-GW 40 to the S-GW 36 (step 1228), from the S-GW 36 to the eNB 32 (step 1230), and finally from the eNB 32 to the UE 34 (step 1232).

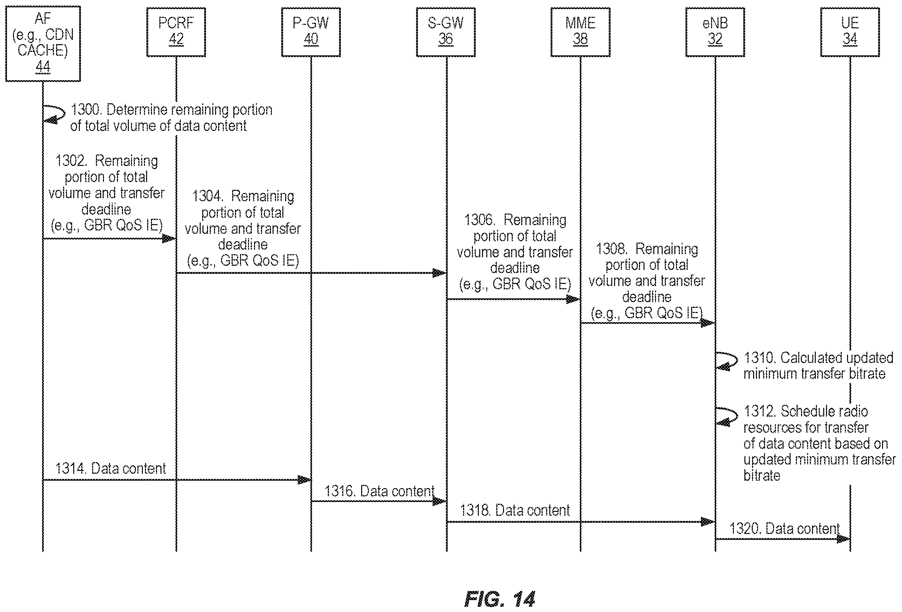

As discussed above, it may become apparent during the transfer of the data content, for example, due to changes in network conditions, that the minimum transfer bitrate is either too slow or too fast. Accordingly, it is desirable to update the minimum transfer bitrate one or more times throughout the transfer of the data content. Figure 14 is a call flow diagram illustrating a method of operating the LTE communications network 24 to update the minimum transfer bitrate according to one embodiment of the present disclosure. First, the AF 44 obtains the remaining portion of the total volume of the data content to be transferred (step 1300). In one embodiment, the remaining portion of the total volume of the data content is obtained by subtracting the volume of the data content that has already been transferred from the AF 44 to the UE 34 from the total volume of the data content. The remaining portion of the total volume of the data content and, optionally, the transfer deadline, are then communicated from the AF 44 to the PCRF 42 (step 1302), from the PCRF 42 to the S-GW 36 (step 1304), from the S-GW 36 to the MME 38 (step 1306), and from the MME 38 to the eNB 32 (step 1308). The remaining portion of the total volume of the data content and the transfer deadline may be communicated in a GBR QoS Information IE. Since the E-RAB for the transfer of the data content will have already been established at this point in time, the GBR QoS Information IE may be communicated in an E-RAB MODIFY message.

The eNB 32 then calculates an updated minimum transfer bitrate based on the remaining portion of the total volume of the data content to be transferred (step 1310). In one embodiment, the updated minimum transfer bitrate may be calculated by dividing the remaining portion of the total volume of the data to be transferred by the time remaining until the transfer deadline. The eNB 32 then schedules one or more radio resources for the transfer of the data content based on the updated minimum transfer bitrate (step 1312). Finally, the data content is transferred from the AF 44 to the P-GW 40 (step 1314), from the P-GW 40 to the S-GW 36 (step 1316), from the S-GW 36 to the eNB 32 (step 1318), and from the eNB 32 to the UE 34 (step 1320).

Updating the minimum transfer bitrate throughout the transfer of the data content ensures that the data content will be transferred to the UE 34 before the transfer deadline. Further, updating the minimum transfer bitrate throughout the transfer of the data content results in the efficient allocation of radio resources in the E-UTRAN 26.

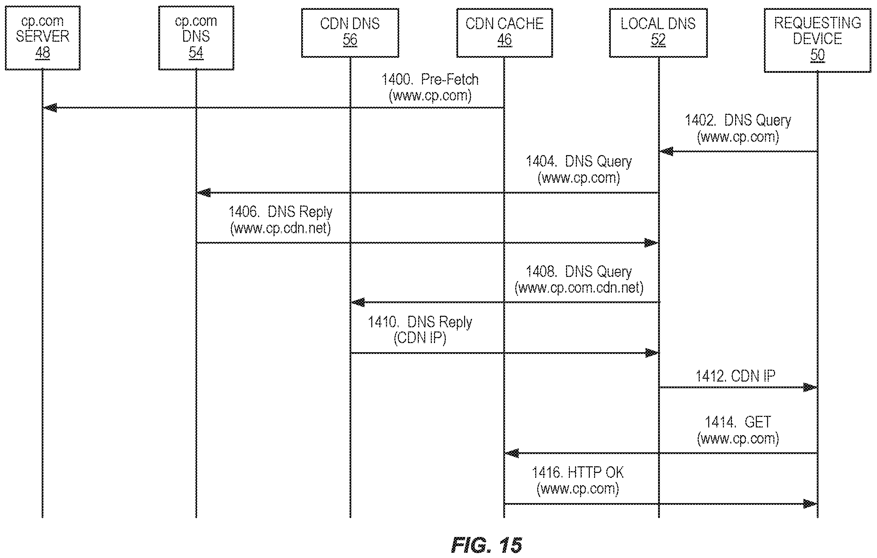

As discussed above, the core network node in the core network associated with the wireless communications network may be a caching node for a CDN, the basic functionality of which is described in the call flow diagram shown in Figure 15. A CDN is generally created to provide a high QoS for delivery of one or more requested resources or services to an end user. Generally, a CDN works by placing a requesting device in contact with the most optimal content delivery server for that device, as discussed in further detail below. First, a CDN caching node 46 may pre-fetch and cache data content, for example, from a website server 48 (step 1400). In one embodiment, the data content is one or more resources related to a website, such as the exemplary website (www.cp.com) shown in Figure 15. The CDN caching node 46 may pre-fetch and cache content based on one or more previous requests for content, or based on a predetermined pre-fetching scheme.

A requesting device 50 then makes a DNS query for the pre-fetched data content (e.g., www.cp.com) to a local DNS server 52 (step 1402). The Local DNS server 52 then forwards the DNS query to a DNS server associated with the requested data content 54 (step 1404). The DNS server associated with the requested data content 54 then provides a DNS reply to the local DNS server 52, which includes a canonical name reference (CNAME) directing to a DNS server associated with the CDN (CDN DNS) 56 (step 1406). The local DNS server 52 then makes an additional DNS query to the CDN DNS 56 (step 1408). The CDN DNS 56 replies to the local DNS server 52 with an IP address for an optimal content delivery server, for example, a CDN caching node 46 (step 1410), which is then forwarded from the local DNS server 52 to the requesting device 50 (step 1412). The requesting device 50 then uses the IP address of the CDN caching node 46 to request a desired data content from the CDN caching node 46 (step 1414). In one embodiment, the request is a hypertext transport protocol (HTTP) GET request, however, any suitable request format may be used without departing form the principles of the present disclosure. The CDN caching node 46 then replies to the response by delivering the requested data content to the requesting device 50.

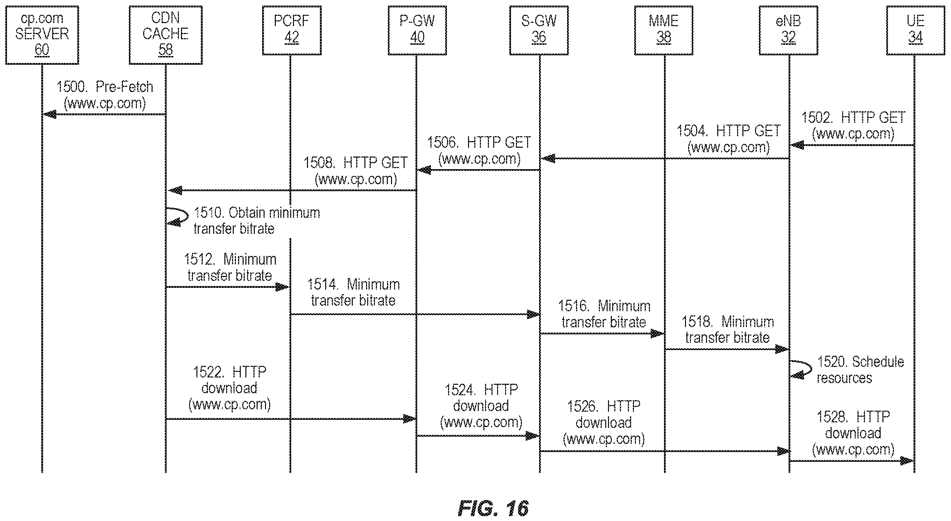

Because a CDN caching node is aware of the total volume of data content for a particular requested resource and/or service, and because a CDN caching node may be familiar with one or more desired QoS parameters for a particular requested resource and/or service, a CDN caching node may be suited to perform one or more operations of the methods described above. Accordingly, Figure 16 is a call flow diagram illustrating a method of operating the LTE communications network shown in Figures 2A and 2B including a CDN caching node according to one embodiment of the present disclosure. First, a CDN caching node 58 pre-fetches one or more resources from a website server 60 (step 1500). In one embodiment, the CDN caching node 58 and the website server 60 are located in the PDN 30. In an additional embodiment, the data content is one or more resources related to a website, such as the exemplary website (www.cp.com) shown in Figure 15.

The UE 34 then initiates a request for a transfer of the data content (step 1502). In one embodiment, the request is an HTTP GET request for one or more resources associated with the website discussed above. The request is then forwarded from the eNB 32 to the S-GW 36 (step 1504), from the S-GW 36 to the P-GW 40 (step 1506), and from the P-GW 40 to the CDN caching node 58 (step 1508). The CDN caching node 58 then obtains a minimum transfer bitrate for the transfer of the data content (step 1510). In one embodiment, the minimum transfer bitrate is calculated based on a total data volume of the data content and a transfer deadline for the transfer of the data content, as discussed above. The minimum transfer bitrate is then communicated from the CDN caching node 58 to the PCRF 42 (step 1512), from the PCRF 42 to the S-GW 36 (step 1514), from the S-GW 36 to the MME 38 (step 1516), and from the MME 38 to the eNB 32 (step 1518). In one embodiment, the minimum transfer bitrate is communicated in the LTE communications network 24 via a GBR QoS Information IE, such as within an INITIAL CONTEXT SETUP, an E-RAB SETUP, an E-RAB MODIFY, or a HANDOVER REQUEST message, as discussed above.

The eNB 32 then schedules one or more radio resources for the transfer of the data content (step 1520). As discussed above, using the minimum transfer bitrate to schedule one or more radio resources for the transfer of the data content allows for a more efficient allocation of radio resources when compared to conventional methods. Finally, the data content is transferred from the CDN caching node 58 to the P-GW 40 (step 1522), from the P-GW 40 to the S-GW 36 (step 1524), from the S-GW 36 to the eNB 32 (step 1526), and from the eNB 32 to the UE 34 (step 1528).

In the embodiments discussed above, various operations are described in a number of discrete steps, which appear in a particular order. However, the present disclosure is not so limited. The various operations described above in any of the embodiments may be further broken down into additional steps, or may be combined together into a single discrete step. Further, the various operations need not be performed in the order of presentation unless explicitly stated otherwise.

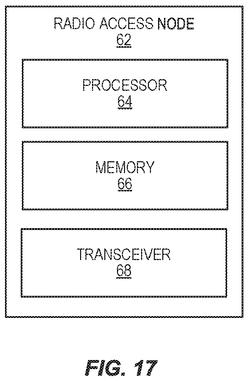

Figure 17 is a block diagram illustrating the structure of a radio access node 62 suitable for use in any of the methods discussed above. The radio access node 62 includes a processor 64, a memory 66, and a transceiver 68. In one embodiment, the memory 66 may contain software which is executable by the processor whereby the radio access node 62 operates according to any one of the embodiments described above. For instance, in one embodiment, by executing the software, the radio access node 62 is operative to obtain a minimum transfer bitrate for a transfer of data content between the radio access node and a wireless communication network in which the radio access node resides and schedules one or more radio resources for the transfer of the data content based on the minimum transfer bitrate. As discussed above, the minimum transfer bitrate may be calculated based on a total volume of the data content and a transfer deadline for the transfer of the data content, which allows the transfer of the data content to finish before the transfer deadline while simultaneously efficiently allocating radio resources in the wireless communications network.

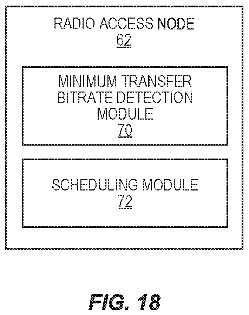

Figure 18 is a block diagram illustrating the structure of the radio access node 62 shown in Figure 17 according to an additional embodiment of the present disclosure. The radio access node 62 in Figure 18 includes a minimum transfer bitrate detection module 70 and a scheduling module 72, each of which is implemented in software that is stored in a computer readable medium (e.g., memory) and executed by a processor of the radio access node 62. In one embodiment, the minimum transfer bitrate detection module 70 may be operative to obtain the minimum transfer bitrate, and the scheduling module 72 may be configured to schedule one or more radio resources based on the minimum transfer bitrate.

In one embodiment, a computer program including instructions, which, when executed by at least one processor, cause the at least one processor to carry out the functionality of the radio access node 62 according to any one of the embodiments described herein is provided. In one embodiment, a carrier containing the aforementioned computer program product is provided. The carrier may be one of an electronic signal, an optical signal, a radio signal, or a computer readable storage medium (e.g., a non-transitory computer readable storage medium such as the memory 66).

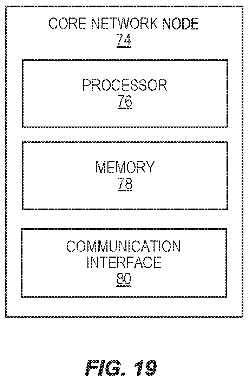

Figure 19 is a block diagram illustrating the structure of a core network node 74 suitable for use in any of the methods discussed above. The core network node 74 includes a processor 76, a memory 78, and a communication interface 80. According to one embodiment, the memory 78 contains instructions executable by the processor 76 whereby the core network node 74 operates according to any one of the embodiments described above. As an example, in one embodiment, by executing the software, the core network node 74 is operable to obtain a total volume of data content for a transfer of the data content between a radio access node and a wireless communications device in an associated wireless communications network, obtain a transfer deadline for the transfer of the data content, calculate a minimum transfer bitrate for the transfer of the data content based on the total volume of the data content and the transfer deadline, and communicate the minimum transfer bitrate directly or indirectly to the radio access node.

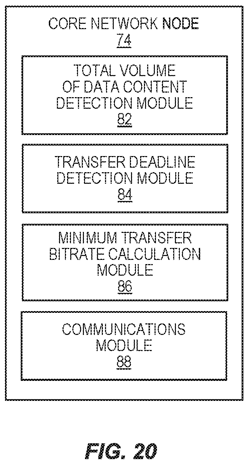

Figure 20 is a block diagram illustrating the structure of the core network node 74 shown in Figure 19 according to an additional embodiment of the present disclosure. The core network node in Figure 20 includes a total volume of data content detection module 82, a transfer deadline detection module 84, a minimum transfer bitrate calculation module 86, and a communications module 88, each of which is implemented in software that is stored in a computer readable medium (e.g., memory) and executed by a processor of the core network node 74. The total volume of data content detection module 82 is operative to obtain the total volume of data content for the transfer of the data content. The transfer deadline detection module 84 is operative to obtain the transfer deadline for the transfer of the data content. The minimum transfer bitrate calculation module 86 is operative to calculate the minimum transfer bitrate. Finally, the communications module 88 is operative to communicate the minimum transfer bitrate directly or indirectly to the radio access node in the wireless communications network.

In one embodiment, a computer program including instructions, which, when executed by at least one processor, cause the at least one processor to carry out the functionality of the core network node 74 according to any one of the embodiments described herein is provided. In one embodiment, a carrier containing the aforementioned computer program product is provided. The carrier may be one of an electronic signal, an optical signal, a radio signal, or a computer readable storage medium (e.g., a non-transitory computer readable storage medium such as the memory 78).

The following acronyms are used throughout this disclosure.
- • 3GPP: 3^{rd} Generation Partnership Project
- • AF: Application Function
- • CDN: Content Distribution Network
- • eNB: Evolved Node B
- • EPC: Evolved Packet Core
- • E-RAB: Evolved Radio Access Bearer
- • E-UTRAN: Evolved Universal Terrestrial Radio Access Network
- • IP-CAN: Internet Protocol Connectivity Access Network
- • LTE: Long Term Evolution
- • PCRF: Policy Charging and Rules Function
- • PDN: Packet Data Network
- • P-GW: Packet Data Network Gateway
- • QCI: QoS Class Identifier
- • QoS: Quality of Service
- • S-GW: Serving Gateway
- • UE: User Equipment
- • VoIP: Voice over Internet Protocol

Those skilled in the art will recognize improvements and modifications to the embodiments of the present disclosure. All such improvements and modifications are considered within the scope of the concepts disclosed herein and the claims that follow.

## Claims

1. A method of operating a wireless communications network (26) comprising a core network (31) and a radio access node (32), the method comprising:
obtaining, a minimum transfer bitrate for a transfer of data content between the radio access node (32) and a wireless communications device (34), wherein the minimum transfer bitrate is calculated based on a total volume of the data content and a transfer deadline for the transfer of the data content, wherein obtaining the minimum transfer bitrate comprises receiving the minimum transfer bitrate in the radio access node (32) directly or indirectly from a network node in the core network (31); and
scheduling one or more radio resources for the transfer of the data content based on the minimum transfer bitrate for the transfer of the data content.

2. The method of claim 1 further comprising:
obtaining an updated minimum transfer bitrate for the transfer of the data content, wherein the updated minimum transfer bitrate is calculated based on an estimate of a remaining portion of the total volume of the data content to be transferred and the transfer deadline for the transfer of the data content; and
scheduling one or more radio resources for the transfer of the data content based on the updated minimum transfer bitrate.

3. The method of any one of claims 1 and 2 wherein receiving the minimum transfer bitrate directly or indirectly from the network node comprises receiving the minimum transfer bitrate directly or indirectly from the network node via in-band signaling or via out-of-band control signaling.

4. The method of any one of claims 1-3 wherein the network node is an application function, AF (44).

5. The method of claim 4 wherein receiving the minimum transfer bitrate directly or indirectly from the network node via out-of-band control signaling comprises receiving the minimum transfer bitrate from the AF via a policy charging and rules function, PCRF (42).

6. The method of claim 5 wherein the AF (44) is located in a packet data network, PDN (30).

7. The method of any one of claims 1, and 3-6 wherein receiving the minimum transfer bitrate directly or indirectly from the network node comprises receiving the minimum transfer bitrate directly or indirectly from the network node via an evolved radio access bearer, E-RAB, control message or via a guaranteed bitrate, GBR, quality of service, QOS, information element, IE.

8. The method of claim 7 wherein the radio access node (32) does not use the GBR QoS Information IE in an admission control process.

9. The method of claim 7 wherein a radio access bearer used for the transfer of the data content is a non-guaranteed bitrate, non-GBR, radio access bearer.

10. The method of claim 1 wherein the transfer of the data content is a download of the data content from the radio access node to the wireless communications device or is an upload of the data content from the wireless communications device (34) to the radio access node (32).

11. The method of claim 1 wherein obtaining the minimum transfer bitrate comprises:
obtaining the total volume of the data content;
obtaining the transfer deadline for the transfer of the data content; and
calculating the minimum transfer bitrate for the transfer of the data content based on the total volume of the data content and the transfer deadline for the transfer of the data content.

12. A method of operating a core network (31) associated with a wireless communications network (26) comprising:
obtaining a total volume of data content for a transfer of the data content between a radio access node (32) and a wireless communications device (34) in the wireless communications network (26);
obtaining a transfer deadline for the transfer of the data content;
calculating a minimum transfer bitrate for the transfer of the data content based on the total volume of the data content and the transfer deadline for the transfer of the data content; and
communicating the minimum transfer bitrate directly or indirectly to the radio access node (32) in the wireless communications network (34).

13. The method of claim 12 wherein communicating the minimum transfer bitrate directly or indirectly to the radio access node (32) in the wireless communications network (26) comprises communicating the minimum transfer bitrate directly or indirectly to the radio access node (32) in the wireless communications network (26) via in-band signaling or via out-of-band control signaling.

14. A method of operating a network node in a core network (31) associated with a wireless communications network (26) comprising:
obtaining a total volume of data content for a transfer of the data content between a radio access node (32) and a wireless communications device (34) in the wireless communications network;
obtaining a transfer deadline for the transfer of the data content; and
communicating the total volume of the data content and the transfer deadline for the transfer of the data content to the radio access node.

15. The method of claim 14 wherein communicating the total volume of the data content and the transfer deadline for the transfer of the data content to the radio access node (32) comprises communicating the total volume of the data content and the transfer deadline for the transfer of the data content to the radio access node via in-band signaling or via out-of-band control signaling..

16. A wireless communications network (26) comprising a core network (31), and a radio access node (32, 62) the wireless communications network being adapted to:
obtain a minimum transfer bitrate for a transfer of data content between the radio access node (32, 62) and a wireless communications device (34), wherein the minimum transfer bitrate is calculated based on a total volume of the data content and a transfer deadline for the transfer of the data content, wherein obtaining the minimum transfer bitrate comprises receiving the minimum transfer bitrate in the radio access node (32, 62) directly or indirectly from a network node in the core network (31) of the wireless communications network (26); and
schedule one or more radio resources for the transfer of the data content based on the minimum transfer bitrate for the transfer of the data content.

17. The wireless communications network (26) of claim 16 adapted to perform the method of any of claims 1-11.

18. A computer program comprising instructions which, when executed on a plurality of processors, cause the plurality of processors to carry out the method according to any one of claims 1-11.

19. A carrier containing the computer program of claim 18, wherein the carrier is one of an electronic signal, an optical signal, a radio signal, or a computer readable storage medium.

20. A core network (31) associated with a wireless communications network adapted to:
obtain a total volume of data content for a transfer of the data content between a radio access node (32) and a wireless communications device (34) in the wireless communications network;
obtain a transfer deadline for the transfer of the data content;
calculate a minimum transfer bitrate for the transfer of the data content based on the total volume of the data content and the transfer deadline for the transfer of the data content; and
communicate the minimum transfer bitrate directly or indirectly to the radio access node (32) in the wireless communications network (26).

21. The core network (31) of claim 20 adapted to perform the method of any of claims 12-13.

22. A computer program comprising instructions which, when executed on at least one processor, cause the at least one processor to carry out the method according to any one of claims 12-13.

23. A carrier containing the computer program of claim 22, wherein the carrier is one of an electronic signal, an optical signal, a radio signal, or a computer readable storage medium.

## Patentansprüche

1. Verfahren zum Betreiben eines drahtlosen Kommunikationsnetzes (26), das ein Kernnetz (31) und einen Funkzugangsknoten (32) umfasst, wobei das Verfahren Folgendes umfasst:
Erhalten einer Mindestübertragungs-Bitrate für eine Übertragung von Dateninhalt zwischen dem Funkzugangsknoten (32) und einer drahtlosen Kommunikationsvorrichtung (34), wobei die Mindestübertragungs-Bitrate auf einem Gesamtvolumen des Dateninhalts und einer Übertragungsfrist für die Übertragung des Dateninhalts basiert, wobei das Erhalten der Mindestübertragungs-Bitrate das Empfangen der Mindestübertragungs-Bitrate in dem Funkzugangsknoten (32) direkt oder indirekt von einem Netzknoten in dem Kernnetz (31) umfasst; und
Planen einer oder mehrerer Funkressourcen für die Übertragung des Dateninhalts basierend auf der Mindestübertragungs-Bitrate für die Übertragung des Dateninhalts.

2. Verfahren nach Anspruch 1, das ferner umfasst:
Erhalten einer aktualisierten Mindestübertragungs-Bitrate für die Übertragung des Dateninhalts, wobei die aktualisierte Mindestübertragungs-Bitrate auf der Grundlage einer Schätzung eines verbleibenden Teils des Gesamtvolumens des zu übertragenden Dateninhalts und der Übertragungsfrist für die Übertragung des Dateninhalts berechnet wird; und
Planen einer oder mehrerer Funkressourcen für die Übertragung des Dateninhalts basierend auf der aktualisierten Mindestübertragungs-Bitrate.

3. Verfahren nach einem der Ansprüche 1 und 2, wobei das direkte oder indirekte Empfangen der Mindestübertragungs-Bitrate von dem Netzknoten das direkte oder indirekte Empfangen der Mindestübertragungs-Bitrate von dem Netzknoten über eine In-Band-Signalisierung oder über eine Out-of-Band-Steuersignalisierung umfasst.

4. Verfahren nach einem der Ansprüche 1 bis 3, wobei der Netzknoten eine Anwendungsfunktion, AF (44) ist.

5. Verfahren nach Anspruch 4, wobei das direkte oder indirekte Empfangen der Mindestübertragungs-Bitrate von dem Netzwerkknoten über eine Out-of-Band-Steuersignalisierung das Empfangen der Mindestübertragungs-Bitrate von der AF über eine Richtlinien-Lade- und Regelfunktion, PCRF (42), umfasst.

6. Verfahren nach Anspruch 5, wobei die AF (44) in einem Paketdatennetzwerk, PDN (30), angeordnet ist.

7. Verfahren nach einem der Ansprüche 1 und 3 bis 6, wobei das direkte oder indirekte Empfangen der Mindestübertragungs-Bitrate von dem Netzwerkknoten das direkte oder indirekte Empfangen der Mindestübertragungs-Bitrate von dem Netzknoten über eine entwickelte Funkzugangsträger-Steuermeldung, E-RAB, oder über ein garantierte Bitrate(GBR)-Servicequalität(QOS)-Informationselement (IE) umfasst.

8. Verfahren nach Anspruch 7, wobei der Funkzugangsknoten (32) das GBR QoS IE nicht in einem Zulassungssteuerungsprozess verwendet.

9. Verfahren nach Anspruch 7, wobei ein Funkzugangsträger, der für die Übertragung des Dateninhalts verwendet wird, ein Nichtgarantierte Bitrate-Funkzugangsträger, non-GBR, ist.

10. Verfahren nach Anspruch 1, wobei die Übertragung des Dateninhalts ein Herunterladen des Dateninhalts von dem Funkzugangsknoten zu der drahtlosen Kommunikationsvorrichtung ist oder ein Hochladen des Dateninhalts von der drahtlosen Kommunikationsvorrichtung (34) zu dem Funkzugangsknoten (32) ist.

11. Verfahren nach Anspruch 1, wobei das Erhalten der Mindestübertragungs-Bitrate Folgendes umfasst:
Erhalten des Gesamtvolumens des Dateninhalts;
Erhalten der Übertragungsfrist für die Übertragung des Dateninhalts; und
Berechnen der Mindestübertragungs-Bitrate für die Übertragung des Dateninhalts auf der Grundlage des Gesamtvolumens des Dateninhalts und der Übertragungsfrist für die Übertragung des Dateninhalts.

12. Verfahren zum Betreiben eines Kernnetzes (31), das einem drahtlosen Kommunikationsnetz (26) zugeordnet ist, das Folgendes umfasst:
Erhalten eines Gesamtvolumens von Dateninhalt für eine Übertragung des Dateninhalts zwischen einem Funkzugangsknoten (32) und einer drahtlosen Kommunikationsvorrichtung (34) in dem drahtlosen Kommunikationsnetz (26);
Erhalten einer Übertragungsfrist für die Übertragung des Dateninhalts;
Berechnen einer Mindestübertragungs-Bitrate für die Übertragung des Dateninhalts auf der Grundlage des Gesamtvolumens des Dateninhalts und der Übertragungsfrist für die Übertragung des Dateninhalts; und
Kommunizieren der Mindestübertragungs-Bitrate direkt oder indirekt an den Funkzugangsknoten (32) in dem drahtlosen Kommunikationsnetz (34).

13. Verfahren nach Anspruch 12, wobei das direkte oder indirekte Kommunizieren der Mindestübertragungs-Bitrate mit dem Funkzugangsknoten (32) in dem drahtlosen Kommunikationsnetz (26) das direkte oder indirekte Kommunizieren der Mindestübertragungs-Bitrate an den Funkzugangsknoten (32) in dem drahtlosen Kommunikationsnetz (26) über eine In-Band-Signalisierung oder über eine Out-of-Band-Steuersignalisierung umfasst.

14. Verfahren zum Betreiben eines Netzknotens in einem Kernnetz (31), das einem drahtlosen Kommunikationsnetz (26) zugeordnet ist, das Folgendes umfasst:
Erhalten eines Gesamtvolumens von Dateninhalt für eine Übertragung des Dateninhalts zwischen einem Funkzugangsknoten (32) und einer drahtlosen Kommunikationsvorrichtung (34) in dem drahtlosen Kommunikationsnetz;
Erhalten einer Übertragungsfrist für die Übertragung des Dateninhalts; und
Kommunizieren des Gesamtvolumens des Dateninhalts und der Übertragungsfrist für die Übertragung des Dateninhalts an den Funkzugangsknoten.

15. Verfahren nach Anspruch 14, wobei das Kommunizieren des Gesamtvolumens des Dateninhalts und der Übertragungsfrist für die Übertragung des Dateninhalts an den Funkzugangsknoten (32) das Kommunizieren des Gesamtvolumens des Dateninhalts und der Übertragungsfrist für die Übertragung des Dateninhalts an den Funkzugangsknoten über eine In-Band-Signalisierung oder über eine Out-of-Band-Steuersignalisierung umfasst.

16. Drahtloses Kommunikationsnetz (26), das ein Kernnetz (31) und einen Funkzugangsknoten (32, 62) umfasst, wobei das drahtlose Kommunikationsnetz für Folgendes ausgelegt ist:
Erhalten einer Mindestübertragungs-Bitrate für eine Übertragung von Dateninhalt zwischen dem Funkzugangsknoten (32, 62) und einer drahtlosen Kommunikationsvorrichtung (34), wobei die Mindestübertragungs-Bitrate auf einem Gesamtvolumen des Dateninhalts und einer Übertragungsfrist für die Übertragung des Dateninhalts basiert, wobei das Erhalten der Mindestübertragungs-Bitrate das Empfangen der Mindestübertragungs-Bitrate in dem Funkzugangsknoten (32, 62) direkt oder indirekt von einem Netzknoten in dem Kernnetz (31) von dem drahtlosen Kommunikationsnetz (26) umfasst; und
Planen einer oder mehrerer Funkressourcen für die Übertragung des Dateninhalts basierend auf der Mindestübertragungs-Bitrate für die Übertragung des Dateninhalts.

17. Drahtloses Kommunikationsnetz (26) nach Anspruch 16, das zur Durchführung des Verfahrens nach einem der Ansprüche 1 bis 11 ausgelegt ist.

18. Computerprogramm, das Anweisungen umfasst, die bei Ausführung auf einer Vielzahl von Prozessoren bewirken, dass die Vielzahl von Prozessoren das Verfahren nach einem der Ansprüche 1 bis 11 ausführen.

19. Träger, der das Computerprogramm nach Anspruch 18 enthält, wobei der Träger eines von einem elektronischen Signal, einem optischen Signal, einem Funksignal oder einem computerlesbaren Speichermedium ist.

20. Kernnetz (31), das einem drahtlosen Kommunikationsnetz zugeordnet ist, das für Folgendes ausgelegt ist:
Erhalten eines Gesamtvolumens von Dateninhalt für eine Übertragung des Dateninhalts zwischen einem Funkzugangsknoten (32) und einer drahtlosen Kommunikationsvorrichtung (34) in dem drahtlosen Kommunikationsnetz;
Erhalten einer Übertragungsfrist für die Übertragung des Dateninhalts;
Berechnen einer Mindestübertragungs-Bitrate für die Übertragung des Dateninhalts auf der Grundlage des Gesamtvolumens des Dateninhalts und der Übertragungsfrist für die Übertragung des Dateninhalts; und
Kommunizieren der Mindestübertragungs-Bitrate direkt oder indirekt an den Funkzugangsknoten (32) in dem drahtlosen Kommunikationsnetz (26).

21. Kernnetz (31) nach Anspruch 20, das zur Durchführung des Verfahrens nach einem der Ansprüche 12 bis 13 ausgelegt ist.

22. Computerprogramm, das Anweisungen umfasst, die bei Ausführung auf mindestens einem Prozessor bewirken, dass der mindestens eine Prozessor das Verfahren nach einem der Ansprüche 12 bis 13 ausführt.

23. Träger, der das Computerprogramm nach Anspruch 22 enthält, wobei der Träger eines von einem elektronischen Signal, einem optischen Signal, einem Funksignal oder einem computerlesbaren Speichermedium ist.

## Revendications

1. Procédé d'exploitation d'un réseau de communications sans fil (26) comprenant un réseau central (31) et un noeud d'accès radio (32), le procédé comprenant :
l'obtention d'un débit binaire de transfert minimal pour un transfert de contenu de données entre le noeud d'accès radio (32) et un dispositif de communications sans fil (34), dans lequel le débit binaire de transfert minimal est calculé sur la base d'un volume total du contenu de données et d'une échéance de transfert pour le transfert du contenu de données, dans lequel l'obtention du débit binaire de transfert minimal comprend la réception du débit binaire de transfert minimal dans le noeud d'accès radio (32) directement ou indirectement à partir d'un noeud de réseau dans le réseau central (31) ; et
la planification d'une ou plusieurs ressources radio pour le transfert du contenu de données sur la base du débit binaire de transfert minimal pour le transfert du contenu de données.

2. Procédé selon la revendication 1, comprenant en outre :
l'obtention d'un débit binaire de transfert minimal mis à jour pour le transfert du contenu de données, dans lequel le débit binaire de transfert minimal mis à jour est calculé sur la base d'une estimation d'une partie restante du volume total du contenu de données à transférer et de l'échéance de transfert pour le transfert du contenu de données ; et
la planification d'une ou plusieurs ressources radio pour le transfert du contenu de données sur la base du débit binaire de transfert minimal mis à jour.

3. Procédé selon l'une quelconque des revendications 1 et 2, dans lequel la réception du débit binaire de transfert minimal directement ou indirectement depuis le noeud de réseau comprend la réception du débit binaire de transfert minimal directement ou indirectement depuis le noeud de réseau via une signalisation intrabande ou via une signalisation de commande hors bande.

4. Procédé selon l'une quelconque des revendications 1 à 3, dans lequel le noeud de réseau est une fonction d'application, AF (44).

5. Procédé selon la revendication 4, dans lequel la réception du débit binaire de transfert minimal directement ou indirectement depuis le noeud de réseau via une signalisation de commande hors bande comprend la réception du débit binaire de transfert minimal à partir de l'AF via une fonction d'imputation et règles de politique, PCRF (42).

6. Procédé selon la revendication 5, dans lequel l'AF (44) se situe dans un réseau de données de paquet, PDN (30).

7. Procédé selon l'une quelconque des revendications 1, et 3 à 6, dans lequel la réception du débit binaire de transfert minimal directement ou indirectement depuis le noeud de réseau comprend la réception du débit binaire de transfert minimal directement ou indirectement depuis le noeud de réseau via un message de commande de porteuse d'accès radio évoluée, E-RAB, ou via un élément d'information, IE, de qualité de service, QoS, de débit binaire garanti, GBR.

8. Procédé selon la revendication 7, dans lequel le noeud d'accès radio (32) n'utilise pas l'IE d'information QoS GBR dans un processus de commande d'admission.

9. Procédé selon la revendication 7, dans lequel une porteuse d'accès radio utilisée pour le transfert du contenu de données est une porteuse d'accès radio à débit binaire non garanti, non-GBR.

10. Procédé selon la revendication 1, dans lequel le transfert du contenu de données est un téléchargement du contenu de données depuis le noeud d'accès radio vers le dispositif de communications sans fil ou est un téléversement du contenu de données depuis le dispositif de communications sans fil (34) vers le noeud d'accès radio (32).

11. Procédé selon la revendication 1, dans lequel l'obtention du débit binaire de transfert minimal comprend :
l'obtention du volume total du contenu de données ;
l'obtention de l'échéance de transfert pour le transfert du contenu de données ; et
le calcul du débit binaire de transfert minimal pour le transfert du contenu de données sur la base du volume total du contenu de données et de l'échéance de transfert pour le transfert du contenu de données.

12. Procédé d'exploitation d'un réseau central (31) associé à un réseau de communications sans fil (26) comprenant :
l'obtention d'un volume total de contenu de données pour un transfert du contenu de données entre un noeud d'accès radio (32) et un dispositif de communications sans fil (34) dans le réseau de communications sans fil (26) ;
l'obtention d'une échéance de transfert pour le transfert du contenu de données ;
le calcul d'un débit binaire de transfert minimal pour le transfert du contenu de données sur la base du volume total du contenu de données et de l'échéance de transfert pour le transfert du contenu de données ; et
la communication du débit binaire de transfert minimal directement ou indirectement au noeud d'accès radio (32) dans le réseau de communications sans fil (34).

13. Procédé selon la revendication 12, dans lequel la communication du débit binaire de transfert minimal directement ou indirectement au noeud d'accès radio (32) dans le réseau de communications sans fil (26) comprend la communication du débit binaire de transfert minimal directement ou indirectement au noeud d'accès radio (32) dans le réseau de communications sans fil (26) via une signalisation intrabande ou via une signalisation de commande hors bande.

14. Procédé d'exploitation d'un noeud de réseau dans un réseau central (31) associé à un réseau de communications sans fil (26) comprenant :
l'obtention d'un volume total de contenu de données pour un transfert du contenu de données entre un noeud d'accès radio (32) et un dispositif de communications sans fil (34) dans le réseau de communications sans fil ;
l'obtention d'une échéance de transfert pour le transfert du contenu de données ; et
la communication du volume total du contenu de données et de l'échéance de transfert pour le transfert du contenu de données au noeud d'accès radio.

15. Procédé selon la revendication 14, dans lequel la communication du volume total du contenu de données et de l'échéance de transfert pour le transfert du contenu de données au noeud d'accès radio (32) comprend la communication du volume total du contenu de données et de l'échéance de transfert pour le transfert du contenu de données au noeud d'accès radio via une signalisation intrabande ou via une signalisation de commande hors bande..

16. Réseau de communications sans fil (26) comprenant un réseau central (31) et un noeud d'accès radio (32, 62), le réseau de communications sans fil étant conçu pour :
obtenir un débit binaire de transfert minimal pour un transfert de contenu de données entre le noeud d'accès radio (32, 62) et un dispositif de communications sans fil (34), dans lequel le débit binaire de transfert minimal est calculé sur la base d'un volume total du contenu de données et d'une échéance de transfert pour le transfert du contenu de données, dans lequel l'obtention du débit binaire de transfert minimal comprend la réception du débit binaire de transfert minimal dans le noeud d'accès radio (32, 62) directement ou indirectement à partir d'un noeud de réseau dans le réseau central (31) du réseau de communications sans fil (26) ; et
planifier une ou plusieurs ressources radio pour le transfert du contenu de données sur la base du débit binaire de transfert minimal pour le transfert du contenu de données.

17. Réseau de communications sans fil (26) selon la revendication 16, conçu pour mettre en oeuvre le procédé selon l'une quelconque des revendications 1 à 11.

18. Programme informatique comprenant des instructions qui, lorsqu'elles sont exécutées sur une pluralité de processeurs, amènent la pluralité de processeurs à effectuer le procédé selon l'une quelconque des revendications 1 à 11.

19. Porteuse contenant le programme d'ordinateur selon la revendication 18, dans laquelle la porteuse est l'un parmi un signal électronique, un signal optique, un signal radio ou un support de stockage lisible par ordinateur.

20. Réseau central (31) associé à un réseau de communications sans fil conçu pour :
obtenir un volume total de contenu de données pour un transfert du contenu de données entre un noeud d'accès radio (32) et un dispositif de communications sans fil (34) dans le réseau de communications sans fil ;
obtenir une échéance de transfert pour le transfert du contenu de données ;
calculer un débit binaire de transfert minimal pour le transfert du contenu de données sur la base du volume total du contenu de données et de l'échéance de transfert pour le transfert du contenu de données ; et
communiquer le débit binaire de transfert minimal directement ou indirectement au noeud d'accès radio (32) dans le réseau de communications sans fil (26).

21. Réseau central (31) selon la revendication 20, conçu pour mettre en oeuvre le procédé selon l'une quelconque des revendications 12 ou 13.

22. Programme d'ordinateur, comprenant des instructions qui, lorsqu'elles sont exécutées sur au moins un processeur, amènent l'au moins un processeur à effectuer le procédé selon l'une quelconque des revendications 12 ou 13.

23. Porteuse contenant le programme d'ordinateur selon la revendication 22, dans laquelle la porteuse est l'un parmi un signal électronique, un signal optique, un signal radio ou un support de stockage lisible par ordinateur.
